Europäisches Patentamt

European Patent Office

Office européen des brevets

(11) Publication number: **0 434 166 A1**

## (12) EUROPEAN PATENT APPLICATION

(21) Application number: 90203421.4

(22) Date of filing: 18.12.90

(51) Int. Cl.5: **C01B 21/072**

(30) Priority: **21.12.89 IT 2279789**

(43) Date of publication of application:
**26.06.91 Bulletin 91/26**

(84) Designated Contracting States:
**BE CH DE DK ES FR GB GR LI NL SE**

(71) Applicant: **TEMAV S.p.A.**
**Via delle Industrie 39**
**I-30175 Venice Porto Marghera(IT)**

(72) Inventor: **Contursi, Luigi**
**Via Bertocchi, 13**
**I-48022 Lugo-Ravenna(IT)**
Inventor: **Fava, Roberto**
**Via del Montano, 3**
**I-00061 Anguillara Sabazia-Rome(IT)**

(74) Representative: **Roggero, Sergio et al**
**Ing. Barzanò & Zanardo Milano S.p.A. Via**
**Borgonuovo 10**
**I-20121 Milano(IT)**

(54) Process for preparing fine powders of aluminium nitride from A12O3 and carbon.

(57) Disclosed is a process for preparing fine powders of aluminum nitride, by starting from an aqueous solution of an inorganic aluminum salt, which process comprises the following steps:

(a) the anion of the inorganic salt of aluminum is at least partially removed by heating by a microwave heating means, with a colloidal solution of an aluminum compound being obtained;

(b) carbon powder is dispersed in said colloidal solution, with a suspension of an aluminum compound and carbon being obtained;

(c) said suspension is mixed with an alkaline solution, with a precipitate being formed, which is filtered, washed and finally dried;

(d) the powder obtained from the precipitate drying step is carbothermally reduced and nitrided at a temperature comprised within the range of from 1350 to 1650° C for a time comprised within the range of from 1 to 24 hours, so that powders containing aluminum nitride are obtained;

(e) carbon is removed from said powders by a calcination carried out at a temperature comprised within the range of from 600 to 700° C, for a time comprised within the range of from 1 to 7 hours, under an oxygen-containing atmosphere.

## "PROCESS FOR PREPARING FINE POWDERS OF ALUMINUM NITRIDE FROM $AL_2O_3$ AND CARBON"

The present invention relates to a process for preparing fine powders of aluminum nitride by starting from $Al_2O_3$ and carbon.

Aluminum nitride (AIN) shows a good chemical stability and a high heat conductivity.

These characteristics make it suitable for use as a functional ceramic material (i.e., for supports for electronic circuits) and as a structural ceramic material (i.e., for components exposed to high temperatures and/or aggressive media).

The starting material to prepare ceramic components made from AIN is AIN powder, which is submitted to suitable fabrication and sintering processes.

The characteristics of the sintered bodies depend on the purity of the AIN powder and on the size of its particles.

Several routes are available to produce said powder:

* direct synthesis from Al metal and $N_2$;
* nitriding in the gas phase of a volatile compound of Al, with $N_2$ and/or $NH_3$;
* carbothermal reduction and nitriding of a mixture of $Al_2O_3$ and C at temperatures comprised within the range of from 1600 to 1900°C, under a nitrogen blanketing atmosphere.

The first method (i.e., the direct synthesis) allows an only incomplete formation of Al nitride to be obtained. The second method (i.e., the nitriding in the gas phase) suffers from the disadvantage that the production cost is high. The disadvantages of both said methods can be at least partially reduced by using the last method.

By techniques of preparation of the mixture of $Al_2O_3$ + C by special chemical routes, an improvement is achieved in said method, which makes it possible purer and smaller-particle-size AIN powders to be obtained, even if the process is carried out at some hundred degrees lower operating temperatures. The purpose of such techniques is of having both reactants as particles of sub-micron particle size and intimately dispersed inside each other.

An example of a chemical method recently adopted to prepare the mixture of $Al_2O_3$ and C is based on the hydrolysis and precipitation with **ammonia** of an aluminum alkoxide (aluminum isopropoxide) in alcoholic solution in which carbon powder was previously dispersed (see US-4 643 859).

The present Applicant has found now a process based on a different chemical method to obtain the mixture of $Al_2O_3$ and C, which is much simpler than the process according to the above cited United States patent, which also enables very pure AIN powders constituted by particles with a very small particle size to be obtained.

The process according to the present invention for preparing fine powders of aluminum nitride, by starting from an aqueous solution of an inorganic aluminum salt, is characterized in that said process comprises the following steps:

(a) the anion of the inorganic salt of aluminum is at least partially removed by heating, with a colloidal solution of an aluminum compound being obtained;

(b) carbon powder is dispersed in said colloidal solution, with a suspension of an aluminum compound and carbon being obtained;

(c) said suspension is mixed with an alkaline solution, (such as, e.g., a solution of ammonium hydroxide), with a precipitate being formed, which is filtered, washed and finally dried;

(d) the powder obtained from the precipitate drying step is carbothermally reduced and nitrided at a temperature comprised within the range of from 1350 to 1650°C for a time comprised within the range of from 1 to 24 hours, so that powders containing aluminum nitride are obtained;

(e) carbon is removed from said powders by a calcination carried out at a temperature comprised within the range of from 600 to 700°C, for a time comprised within the range of from 1 to 7 hours, under an oxygen-containing atmosphere,

and characterized in that the aqueous solution of the inorganic salt of aluminum is heated by a microwave heating means.

The carbon powder which is dispersed throughout the colloidal solution should preferably consist of particles having a particle size smaller than 40 nm.

Furthermore, the atomic ratio of Al/C should preferably be comprised within the range of from 2:3 to 2:5.

Some examples are now given to better illustrate the invention. In no way should any of the following examples be construed as being limitative of the same invention.

Example 1

A solution of 100 g of $Al(NO_3)_3.9H_2O$ in 100 $cm^3$ of $H_2O$ is de-nitrated in a 1400-W microwave oven at 80%, power, for a 15-minute time. The resulting residue is collected in 100 $cm^3$ of water and is treated once more in the microwave oven, under the same conditions. The residue, which contains about 30% of the initial nitrate, is dispersed again in $H_2O$ at 80-90°C, with stirring, until a practically clear solution is obtained. After cooling down to room temperature and addition of $H_2O$ to adjust the volume of the solution back to 100 cm³, 5.6 g of carbon powder is added (atomic ratio of Al/C = 2:3.5; surface area and size of carbon particles, respectively = 100 m²/g and 20-30 nm).

The dispersion of carbon powder is accomplished by mechanical stirring and sonication for 15 minutes.

The solution is then poured in an approximately 7 M solution of ammonium hydroxide.

The resulting precipitate is filtered, washed with $H_2O$ and air-dried at 150°6 for 2 hours.

The powder is eventually transferred to an alumina tray and is charged to a furnace inside which it is kept at 1500°6 for a 4-hour time, under a nitrogen flow.

When submitted to X-ray diffraction (RXD) analysis, the powder resulted to prevailingly contain the crystal phase corresponding to AlN. After a 6-hour long calcination at 650°C, the resulting powder is constituted by 90% AlN.

Example 2

A mixture of hydrous Al oxide and carbon prepared as disclosed in Example 1 is heated at 1550°C for 6 hours under a flowing $N_2$ atmosphere. After a 6-hour long calcination in air at 650°C, the analysis by RXD showed that the resulting powder was constituted by one single crystal phase corresponding to AlN. At the chemical analysis, the obtained product resulted to be 93% AlN.

The SEM (scanning electron microscope) analysis shows that the size of the particles is of round 0.5 micrometres.

Example 3

A solution of 100 g of $Al(NO_3)_3 . 9H_2O$ in 100 cm³ of $H_2O$ is de-nitrated in a 1400-W microwave oven at 80% power, for a 15-minute time. The resulting residue is dispersed in $H_2O$ at 80-90°C, with stirring, until a practically clear solution is obtained. After cooling and addition of $H_2O$ to adjust the volume of the solution back to 100 cm³, carbon powder is dispersed first by mechanical stirring, and then by sonication, for 15 minutes; the atomic ratio of Al/C = 2:4. The precipitate obtained with ammonium hydroxide solution is filtered, washed and air-dried at 150°C for 2 hours.

The mixture of hydrous Al oxide and C is charged to a furnace and is kept at 1550°C for a 6-hour time, under a flowing nitrogen stream. After removing carbon by a 6-hour calcination in air at 650°C, the powder is constituted by 89% AlN.

(Comparative) Example 4

25 g of $Al(OH)_3$ powder is dispersed in 100 cm³ of $H_2O$ by a 15-minute sonication, until a practically clear solution is obtained. To said solution, 6.7 g of carbon powder is added (atomic Al/C ratio = 2:3.5) first with mechanical stirring and then with sonication. Due to thixotropy, a gel-like mass is obtained after about 2 minutes. After a 2-hour drying at 150°C, the mixture of hydrous Al oxide and C is charged to the furnace and is kept 4 hours at 1550°C under a flowing $N_2$ atmosphere.

Carbon is then removed by a 6-hour calcination in air at 650°C. The resulting powder is constituted by 59% AlN.

(Comparative) Example 5

A solution consisting of 100 g of $Al(NO_3)_3 . 9H_2O$ in 100 ml of water is partially de-nitrated by boiling under room pressure; when the volume of the solution is about one third of the initial volume, the volume is adjusted back to said initial value with $H_2O$. The heating is discontinued after about 14 hours and the volume of the colloidal solution of hydrous aluminum oxide is adjusted to 100 ml; the pH of the sol is 2.2.

To said solution, 6.15 g of carbon powder (surface-area 100 m²/g, particle size 20-30 nm) is then added. The carbon powder is dispersed by mechanical stirring and sonication for 15 minutes.

The suspension is then poured in an approximately 7 M solution of ammonium hydroxide. The resulting precipitate is filtered, washed with $H_2O$ and air-dried at 150°C for 2 hours.

The powder is eventually transferred to an alumina tray, is charged to a furnace and is kept at 1550°C for a 6-hour time, under a flowing nitrogen stream.

Carbon is then removed by a 6-hour long oxidation with air at 650°C. The chemical analysis shows that 89% of the resulting product is AlN.

(Comparative) Example 6

150 g of $Al(NO_3)_3 . 9H_2O$ is dissolved in $H_2O$; the volume of the resulting solution is: 150 ml.

To this solution, 7.2 g of carbon powder (atomic Al/C ratio = 2:3) is then added with mechanical stirring and sonication.

The suspension is then poured in a 7 M solution of ammonium hydroxide, with a precipitate of hydrous Al oxide and carbon being thus obtained.

The precipitate is filtered, washed with $H_2O$ and air-dried at 150°C for 2 hours. The mixture of hydrous Al oxide and carbon is then charged to a furnace and is kept at 1500°C for a 4-hour time, under a flowing $N_2$ stream.

The obtained powder contained 59% of AlN and 3% of C.

## Claims

1. Process for preparing fine powders of aluminum nitride, by starting from an aqueous solution of an inorganic aluminum salt, characterized in that said process comprises the following steps:

   (a) the anion of the inorganic salt of aluminum is at least partially removed by heating, with a colloidal solution of an aluminum compound being obtained;

   (b) carbon powder is dispersed in said colloidal solution, with a suspension of an aluminum compound and carbon being obtained;

   (c) said suspension is mixed with an alkaline solution, with a precipitate being formed, which is filtered, washed and finally dried;

   (d) the powder obtained from the precipitate drying step is carbothermally reduced and nitrided at a temperature comprised within the range of from 1350 to 1650°C for a time comprised within the range of from 1 to 24 hours, so that powders containing aluminum nitride are obtained;

   (e) carbon is removed from said powders by a calcination carried out at a temperature comprised within the range of from 600 to 700°C, for a time comprised within the range of from 1 to 7 hours, under an oxygen-containing atmosphere,

   and characterized in that the aqueous solution of the inorganic salt of aluminum is heated by a microwave heating means.

2. Process according to claim 1, in which the carbon powder dispersed in the colloidal solution has a particle size smaller than 40 nm.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-271237 (MINNESOTA MINING AND MANUFACTURING COMP) <br> * claims 2, 6, 7 * | 1, 2 | C01B21/072 |
| Y | US-A-4784686 (MEEK ET AL.) <br> * abstract; column 2, line 15-23; table * | 1, 2 | |
| A | GB-A-2019178 (DOYOKURO KAKUNENRYO KAI) <br> * abstract; page 1, line 120 – page 2, line 7 * | 1 | |
| A | EP-A-272493 (KAWASAKI STEEL CORP) <br> * page 4, lines 4 – 5; claims 1-3 * | 1 | |
| D,A | US-A-4643859 (MITOMO ET AL.) <br> * column 6, lines 34 – 40 * | 2 | |

TECHNICAL FIELDS
SEARCHED (Int. Cl.5 )

C01B
C01F
B01J

The present search report has been drawn up for all claims

| Place of search | Date of completion of the search | Examiner |
|---|---|---|
| THE HAGUE | 27 FEBRUARY 1991 | ZALM W.E. |

EPO FORM 1503 03.82 (P0401)